**Europäisches Patentamt**

(19) **European Patent Office**

**Office européen des brevets**

(11) Publication number : **0 345 293 B1**

(12) # EUROPEAN PATENT SPECIFICATION

(45) Date of publication of patent specification :
26.04.95 Bulletin 95/17

(51) Int. Cl.⁶ : **G02B 21/00, G02B 21/06, G02B 21/14**

(21) Application number : **88902334.7**

(22) Date of filing : **17.02.88**

(86) International application number :
**PCT/US88/00539**

(87) International publication number :
**WO 88/06300 25.08.88 Gazette 88/19**

(54) **MICROSCOPE.**

(30) Priority : **17.02.87 US 15315**

(43) Date of publication of application :
**13.12.89 Bulletin 89/50**

(45) Publication of the grant of the patent :
**26.04.95 Bulletin 95/17**

(84) Designated Contracting States :
**DE GB**

(56) References cited :
**US-A- 3 798 435
US-A- 3 933 408
US-A- 4 113 344
US-A- 4 148 552
MICROSCOPE PHOTOMETER, Leitz Publication prior to 17 February 1987, pp. 14-18
MICRO-FTIR SPECTROMETERS AND FTIR MICROSCOPE, Anulect Publication prior to 17 February 1987**

(73) Proprietor : **Spectra-Tech, Inc.
652 Glenbrook Road
P.O. Box 2190
Stamford Connecticut 06906 (US)**

(72) Inventor : **MESSERSCHMIDT, Robert, G.
9 Hickory Hill
Westport, CT 06880 (US)**
Inventor : **STING, Donald, W.
358 Turtleback Road
New Canaan, CT 06840 (US)**

(74) Representative : **Cockbain, Julian, Dr. et al
Frank B. Dehn & Co.
Imperial House
15-19, Kingsway
London WC2B 6UZ (GB)**

EP 0 345 293 B1

## Description

The present invention relates to the general field of microscopy and particularly the field of Fourier-transform infrared (FT-IR) microspectrophotometry.

The ready existence of commercial FT-IR spectrophotometers greatly facilitates infrared analysis of specimens. The utility of FT-IR microspectroscopy, however, is limited by the size of the microscopic sample that can be observed. If a sample is too small, radiant energy from surrounding areas reaches the detector and produces a spectrum containing the combined features of all materials in the field of view of the microscope. This phenomenon is termed spectroscopic mixing and is a problem which is particularly acute for an infrared microscope because the longer wavelength of the infrared radiation results in lower inherent resolution as compared to, for example, a visible light microscope. Spectroscopic mixing may be eliminated by electronically subtracting the spectrum of a known material from a mixed spectrum. Electronic subtraction does not work, however, without first knowing both the spectral features and the relative intensity of the features for the area immediately surrounding the object of interest. As a practical matter, electronic subtraction often does not work because the spectrum of the surrounding material cannot be isolated.

The resolution of any microscope is limited by the effects of diffraction. Diffraction depends on the wavelength of the radiant energy, the numeric aperture of the optical system and the spatial coherence of the radiation. The smallest separation of objects that may be resolved is typically expressed in terms of Rayleigh's criterion which is mathematically defined as 0.61 times the wavelength of the radiant energy divided by the numerical aperture of the microscope. Diffraction, however, has long been recognized as a practical limit to resolution and not as a theoretical limit. Only the wavelength of the radiant energy ultimately need limit the resolution of a microscope.

In U.S. Patent 3,013,476, Minsky discloses what has come to be known in the art as a confocal scanning microscope. The confocal microscope uses two pinhole apertures positioned at focal planes. One pinhole aperture is placed at a real image plane between a light source and an objective lens so that the lens focuses the light emerging from the pinhole aperture onto a sample. A second pinhole aperture is positioned between an objective lens and a detector at a real image plane so that light from the sample is focused onto the second pinhole aperture. A sample is placed at the sample image plane and moved in a scanning pattern so that the detector supplies an input signal corresponding to the raster scan of a television. Minsky discloses that the confocal scanning microscope reduces the depth of field for an optically thick transmissive sample because the detector receives very little light from outside the plane of the sample image plane.

Others have noted that a confocal microscope increases the image contrast by reducing the amount of stray light that reaches the detector from outside the image plane. This superior depth of field resolution in a confocal microscope produces an apparent increase in resolution. Sheppard and Wilson of the University of Oxford have noted that a scanning confocal microscope may obtain an actual increase in the resolution above that anticipated for using the same optics without a confocal arrangement. This actual improvement in resolution, however, is only as great as a factor of 2.4 and is accompanied by a reduction in image contrast and, hence, a reduction in apparent resolution.

Experimental research in the field of confocal microscopy apparently has been directed to producing a scanning microscope for forming an image of a sample. The resolution of a scanning microscope is limited by the motion of the sample relative to the radiant energy. No known experiment has attempted to determine the actual point to point resolution of a confocal microscope.

Present mathematical models of image formation in a confocal microscope provide an inadequate explanation of image formation in the field of microspectrophotometry. The transform function for a confocal microscope involves a complicated convolution of the transform functions of the condensing and collecting optics as well as the focal plane apertures. The only exact mathematical solutions that have been published involve the special cases of point to point imaging of a point source that emits radiant energy that is either perfectly coherent or perfectly incoherent. Microspectrophotometry, however, necessarily involves the use of partially coherent radiant energy. The source of the radiant energy has effective spatial dimensions that are determined by the size and shape of the sample. The wavelength range of the radiant energy is determined by the wavelength range of the spectroscopic characteristics of the sample which are to be observed. The optical properties of a confocal microscope that uses partially coherent radiant energy is therefore important for microspectrophotometry and must be determined experimentally.

Practical concerns relating to throughput efficiency mitigate against using a confocal microscope in microspectroscopy. Conventional confocal microscopes have used a laser as an intense light source to supply monochromatic light to the source side pinhole aperture. However, conventional spectrometers, especially FT-IR spectrophotometers, do not have an intense source of constant amplitude radiant energy over a broad frequency range. Further, confocal microscopes have only attempted to image samples and not to distinguish between regions on a sample having different compositions. Thus, the theory of confocal microscopy and conventional confocal scanning microscopes have held no practical utility for microspectroscopy in general or for FT-IR microspectrophotometry in particular.

In their publication "Micro-FTIR spectrometers and FTIR microscopes", Analect Instruments of Irvine, California, USA described an FT-IR microscope provided at one image plane with a diaphragm which can be adjusted in the visual mode to provide some selection of the area of the sample which is to be analysed in the IR mode.

The present invention is based on the recognition that, by masking the imaging energy (IR) at at least two image planes conjugate with the sample plane, one can obtain an order of magnitude improvement in spatial definition of an observation area on the sample.

Thus viewed from one aspect the invention provides a microscope comprising:
a source for a beam of radiant energy;
a sample plane whereat a sample is positionable;
radiant energy detector means; and
an optics system defining a beam path for radiant energy from said source to said sample plane and from said sample plane to said detector means,
said optics system comprising
a first mask disposed in said path and adjustable to define a shape for said path, and
a first lens means disposed in said path between said sample plane and said first mask and having conjugate points at said first mask and said sample plane;
characterized in that said optics system further comprises
a second adjustable mask disposed in said path, and
a second lens means disposed in said path between said sample plane and said second mask and having conjugate points at said second mask and said sample plane.

In the microscope of the invention, the optics means may be operable to define different beam paths corresponding to different operational modes for the microscope, i.e. transmission, reflectance, etc. More particularly, the optics means are preferably operable to define a beam path section selected from the following:

(i) from said second mask to said second lens means, through said sample plane, to said first lens means, and to said first mask;

(ii) from said first mask via said first lens means to said sample plane and from said sample plane back via said first lens means to said first mask;

(iii) from said second mask via said second lens means to said sample plane and in part back via said second lens means to said second mask and in part through said sample plane to said first lens means and thence to said first mask;

(iv) from said first mask to said first lens means, through said sample plane, to said second lens means, and to said second mask;

(v) from said second mask via said second lens means to said sample plane and from said sample plane back via said second lens means to said second mask; and

(vi) from said first mask via said first lens means to said sample plane and in part back via said first lens means to said first mask and in part through said sample plane to said second lens means and thence to said second mask.

The microscope is conveniently provided with beam path selection means to allow selection between two or more such modes.

Such a range of operational modes may however not be necessary and in one preferred embodiment of the microscope of the invention the beam path selection means is operable to select between the operational modes represented by paths (i) and (ii) above, i.e. the transmission and reflectance modes.

The microscope conveniently takes the form of a "universal" microscope, in effect being a combination of a visible light microscope and a radiant energy (e.g. IR) microscope/spectrometer. In this case it may also comprise a first light source for a visible light beam and viewing means for observing visible light from the sample plane, with the optics system further defining a light path for visible light from the light source to the sample plane and from the sample plane to the viewing means. In this event it also preferably comprises a second beam path selection means operable to permit either radiant energy from the source for a radiant energy beam or visible light from the light source to pass to the sample plane along a path section common to the beam path and the light path. In this universal microscope the optics system is conveniently operable to define a light path having a path section common with the beam path and comprising at least one of sections (i), (ii), (iv) and (v) as defined above.

Such a microscope is conveniently provided with a second visible light beam source and with an optics system which is operable to define a light path for visible light from this second source to the sample plane and from the sample plane to the viewing means at least in part along the common path section with the light paths for light from the first and second light sources travelling to the sample plane from the first and second masks respectively. Similarly, further beam path selection means may be provided which are operable to select the path(s) along which visible light travels from the light source(s) to the viewing means.

In one preferred embodiment, the microscope of the invention has as said source a source for a beam 1 of invisible radiant energy,
the microscope further comprising a first visible light beam source 224, 225 and viewing means 219 for observing visible light from said first visible light beam source,

the optics system defining as a first beam path a beam path from said source for a beam of invisible radiant energy to said sample plane and from said sample plane to said detector means and defining as a second beam path a beam path from said first visible light beam source to said sample plane and from said sample plane to said viewing means, said first beam path having a path section in common with said second beam path,

said first mask 202 being disposed in said common path section upstream of said sample plane in said first and second beam paths and being provided with means for the adjustment thereof to vary the shape of the beam aperture thereof,

said first leans means 217 being disposed in said common path section between said first mask and said sample plane and having conjugate points in said first beam path at said first mask and said sample plane,

said second mask 204 being disposed in said first beam path downstream of said sample plane in the transmittance mode of said first beam path and being provided with means for the adjustment thereof to vary the shape of the beam aperture thereof,

and said second lens means 233 being disposed in said first beam path between said second mask and said sample plane and having conjugate points in said first beam path at said second mask and said sample plane,

the microscope further comprising first selection means 221, 227 operable to direct either a radiant energy beam 1 or a visible light beam to said sample plane and thence to said detector means or to said viewing means respectively.

In a second prefrered embodiment, the microscope of the invention has as said source a source for a beam 1 of invisible radiant energy,

the microscope further comprising first and second visible light beam sources 224, 225, 234, 235 and viewing means 219 for observing visible light from said first and/or second visible light beam sources,

the optics system defining as a first beam path a beam path from said source for a beam of invisible radiant energy to said sample plane and from said sample plane to said detector means and defining as a second and a third beam path beam paths respectively from said first and second visible light beam sources to said sample plane and from said sample plane to said viewing means, said first beam path having a path section in common with said second and/or third beam paths,

said first mask 202 being disposed in said common path section upstream of said sample plane in said first and second beam paths and

being provided with means for the adjustment thereof to vary the shape of the beam aperture thereof,

said first leans means 217 being disposed in said common path section between said first mask and said sample plane and having conjugate points in said first beam path at said first mask and said sample plane,

said second mask 204 being disposed in said common path section upstream of said sample plane in said third beam path and downstream of said sample plane in the transmittance mode of said first beam path and being provided with means for the adjustment thereof to vary the shape of the beam aperture thereof,

and said second lens means 233 being disposed in said common path section between said second mask and said sample plane and having conjugate points in said first beam path at said second mask and said sample plane,

and the microscope further comprising first selection means 221, 227 operable to direct either a radiant energy beam 1 or a visible light beam to said sample plane and thence to said detector means or to said viewing means respectively.

In these two embodiments, the microscope conveniently also comprises a second selection means operable to direct to the detector means either radiant energy passing through the sample plane or radiant energy reflected at the sample plane.

The microscope of the invention conveniently takes the form of a universal microscope in combination with a commercial FT-IR spectrophotometer and comprising a visible light microscope for selecting and masking an area of a sample and an infrared microscope for sampling the masked area. The visible light microscope and the infrared microscope share a common optical path between one or more remote image plane masks (i.e. masks disposed at an image plane conjugate with the sample plane) and a sample plane such that both the visible light and the infra-red radiant energy are masked twice, once when the radiant energy is incident to the surface of the sample and once when the radiant energy exits the sample, so as to spatially define the same area at the sample plane. The first image plane mask removes energy from outside the target area at the sample plane. The second image plane mask removes energy from outside the target area that is diffracted by the first mask or the condensing and collecting optics. The first remote image plane is effectively imaged onto the second remote image plane with the radiant energy gaining spectroscopic information and additional image information by passing through or reflecting off a sample located at an intervening sample plane.

A preferred embodiment of the present invention comprises a universal visible light and infrared microscope that easily switches between trasmittance and reflectance modes in either upright or inverted configurations. A visual observation means permits a microscopist to observe a sample in reflectance mode simultaneously in both upright and inverted modes so as to properly mask a sample that is opaque to visible light but transparent to infrared energy. A spectroscopist may thus select an observation area before directing the infra-red energy beam of the FT-IR spectrophotometer at the selected area.

Experiments have shown that the spatial extent of the area at the sample plane defined by the mask in visible light is substantially the same area resolved by the infrared radiation even though the wavelength of the infrared radiation is approximately ten times greater than the wavelength of the visible light. The improvement in resolution obtained with partially coherent radiant energy exceeds anything predicted from theoretical investigations of the special cases of confocal imagery for point sources of perfectly coherent and perfectly incoherent radiation. Samples having a diameter of less than 8 microns have been spectroscopically isolated with 2-25 micron infrared radiant energy.

The microscope of the present invention will now be described further by way of example and with reference to the accompanying drawings, in which:

Figure 1 is a schematic layout of a universal microscope that places a sample plane between masked remote image planes according to the present invention;

Figure 2 is useful for understanding the phenomenon of spectroscopic mixing and how the present invention overcomes the problem;

Figure 3 illustrates the diffraction pattern of masked microscope objectives using incoherent radiant energy; and

Figure 4 is a spectrum obtained in accord with the teachings of the present invention.

For the purposes of the present invention, the phrase "radiant energy" describes electromagnetic radiation used to observe a microscopic sample with an electronic detector. In contrast, the phrase "visible light" refers to electromagnetic radiation that in some way makes the sample visible to a microscopist. It is preferred that the visible light have a shorter wavelength than the radiant energy.

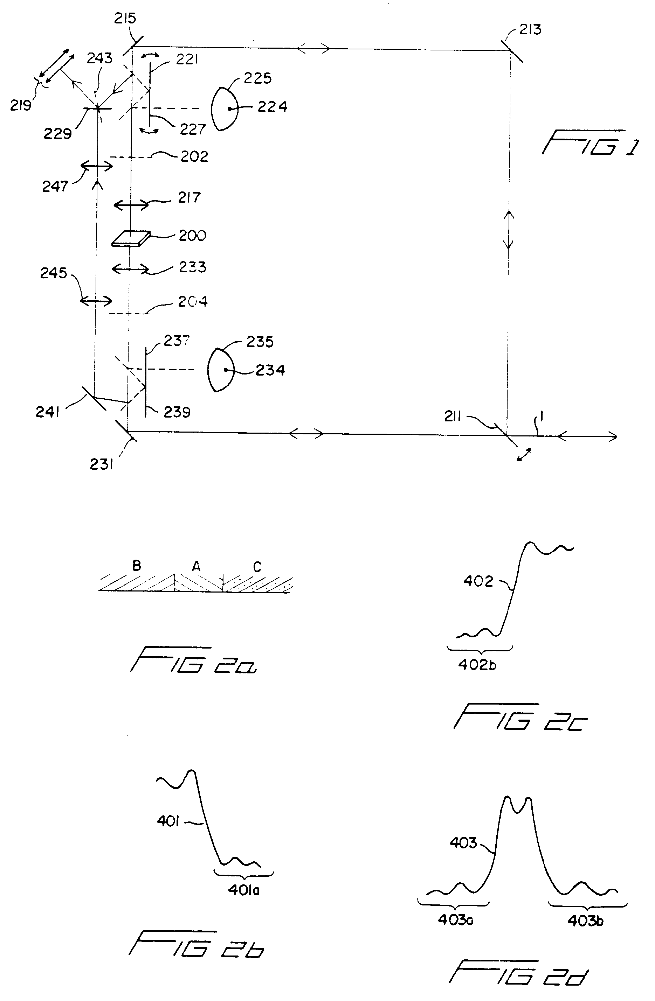

Figure 1 shows a universal microscope for use with the present invention. To simplify the drawing and aid in understanding the invention, condensing lenses are represented by outwardly pointing arrows and remote image planes are represented by dashed lines in a style that is generally known to those skilled in the art. A beam of radiant energy 1 is incident on mode selecting mirror 211.

In a reflectance mode of operation, mirror 211 reflects radiant energy to mirrors 213 and 215. Mirror 215 directs the radiant energy to sample plane 200 through first focusing objective 217 which is preferably a Cassegrainian mirror lens. Before being focused on the sample plane, however, the microscope of the present invention focuses the radiant energy at a first remote image plane 202 that is physically remote from sample plane 200. (In the claims below, for ease of interpretation in accordance with Rule 29 EPC, the reference numerals specified for image planes are also used in relation to the masks disposed at such planes). A first variable aperture diaphragm, not shown in Figure 1, spatially defines an arbitrary, adjustable geometric shape onto remote image plane 202. First focusing objective 217 reimages the first remote image plane at the sample plane 200 to permit selecting the area on the sample plane 200 to permit selecting the area on the sample plane 200 that is illuminated by the incident radiant energy. First focusing optics 217 reimages the remote image plane onto sample plane 200 so that the first variable aperture diaphragm spatially defines both the incident and reflected radiant energy.

In an inverse transmittance mode, mode mirror 211 permits the radiant energy to travel directly from the source of radiant energy to mirror 231. The incident radiant energy forms a focus at second remote image plane 204. A second variable aperture diaphragm at the second remote image plane, not shown in Figure 1, spatially defines an arbitrary geometric shape. Second focusing objective 233, preferably a Cassegrainian mirror lens, reimages the second remote image plane onto the sample plane to permit selecting the area on the sample plane that is illuminated by the radiant energy. First focusing objective 217 focuses the radiant energy transmitted through sample plane 200 at first remote image plane 202. The first variable aperture diaphragm at first remote image plane 202 spatially defines the shape of the illuminated area at the first remote image plane to correspond to the image of the second variable aperture diaphragm at the second remote image plane. Mirrors 215, 213 and 211 direct the transmitted radiant energy to the detector.

The microscope shown in Figure 1 permits the sample plane 200 to be viewed in a variety of different modes. The microscope is operated in reflectance mode by positioning mirror 211 so that the beam of incident radiant energy is directed by mirror 231 through remote image plane 204. An appropriate beam splitter must be used to separate the incident and reflected radiant energy. Likewise, the microscope may operate in a transmissive mode by using first focusing objective 217 to direct the radiant energy from the source to the sample plane. Second focusing objective 233 collects the transmitted radiant energy and directs it to the detector using mirror 231. The microscope is operated in an inverse transmissive/reflectance mode by directing the incident radiant energy to second focusing objective 233 and using first focusing objective 217 to collect radiant energy that is transmitted through the sample and second focusing objective 233 to collect radiant energy that is reflected from the sample. The microscope may be operated in a transmissive/reflectance mode by directing the incident radiant energy to first focusing objective 217 using second focusing objective 233 to collect radiant energy that is transmitted through the sample and first focusing objective 217 to collect radiant energy that is reflected from the sample.

It is believed that the majority of the modes of operation using the radiant energy need not normally be used. Therefore, a microscope having only transmissive and reflectance modes of operation is preferred for reasons of mechanical simplicity and economy. The remaining modes, however, have utility in particular instances such as for easing sample handling and for checking the reliability of observations.

The shape of the transmissive area at first remote image plane 202 may be determined using a reflectance observation beam with eyepiece 219 which, in combination with flipper mirror 221 and flat mirror 229, provides means for visually observing the combined images of both sample plane 200 and first remote image plane 202. Flipper mirror 221 preferably blocks out the radiant energy so that image planes 200 and 202 are observed only with visible light emanating from filament 224 of lamp 225 by way of a partially transmissive flipper mirror 227.

The smaple plane may be viewed using a transmissive observation beam of visible light from filament 234 of lamp 235. Second focusing objective 233 preferably images the visible light reaching first remote image plane 204 by way of partially transmissive mirror 237. First focusing objective 217 directs the visible light to eyepiece 219 by way of mirrors 221 and 229.

The microscope shown in Figure 1 can produce numerous additional observation beams of visible light. The microscope may receive an inverse reflectance observation beam from filament 234 of lamp 235. Partially transmissive mirror 237 reflects part of the beam of visible light to sample plane 200. Mirror 239 directs the reflected light to mirror 241. Transfer optics 245 and 247 direct the light to eyepiece 219 by way of mirror 243. Further, eyepiece 219 may be constructed with appropriate transfer optics so that the microscope may receive dual reflectance observation beams from lamps 225 and 235 which permit simultaneously observing the masking of remote image planes 202 and 204 with reflected light. The dual reflectance beam permits masking each remote image plane to the same shape when the sample is opaque to visible light but transmissive to the radiant energy. Additionally, lamp 225 can produce an inverse transmissive observation beam using mirrors 227 and 239.

The optical path of the microscope may be symmetric with respect to the optical path taken by the radiant energy or the visible light with respect to the sample plane. Thus, the microscope of the present invention easily converts from a conventional upright microscope into an inverted microscope as needed to make a particular measurement.

The preferred embodiment of the present invention uses entirely mirror optics at any place where visible light and radiant energy share a common optical path. For example, most visible light transmissive materials used in microscopes are opaque to infrared light and, in any event, no refracting lens is known that can focus infrared radiant energy and visible light at the same plane. Exact concurrences of the image planes formed with the radiant energy and visible light is necessary to mask a sample with visible light and then observe it with the radiant energy.

Adjustments to the focusing objective may be necessitated by optical distortions introduced by the sample. For example, it is known in the art that a sample may introduce spherical aberration into the observed image. This spherical aberration may be corrected by reducing the separation of the primary and secondary mirrors of focusing objectives 217 and 233 according to the formula:

$$Kt (n_i^2 - 1) / n_i^3;$$

where

t = thickness of the sample;

$n_i$ = index of refraction of the specimen, and

K = a constant unique to the microscope objective.

The derivation and use of this formula is understood by a person skilled in the art and, therefore, not a subject of the present invention.

Figure 2 illustrates the phenomenon of spectroscopic mixing that limits the resolution of a microspectrophotometer. Figure 2a is a schematic representation of three sample materials, A, B and C. Figure 2b shows profile 401 which represents the intensity of the radiant energy from region B. Part 401a of profile 401 represents the radiant energy diffracted into region A. Likewise, Figure 2c shows profile 402 corresponds to the radiant energy from material C. Profile 402b represents the radiant energy from material C diffracted into the area of material A. Finally, Figure 2d shows profile 403 corresponding to the profile of the radiant energy from material A. Profiles 403a and 403b represent radiant energy that is diffracted from the region of material A into the regions containing materials B and C, respectively.

The present of extraneous energy from materials B and C in the field of view of material A causes the spectrum of material A to be mixed with the spectra of all three materials. This spectroscopic mixing may be corrected in several ways. The microscope of the present invention minimizes spectroscopic mixing through the spatial definition of a target region at the sample image plane to correspond in shape to the shape of material A. Spatial definition means first removing radiant energy from outside the shape of a target at a real image plane corresponding to the sample image plane and then removing radiant energy that is diffracted from within said shape into regions outside said shape at a real image plane corresponding to said sample image plane. Defining the spatial extent of the incident radiation causes materials B and C to receive only energy from fringes 403a and 403b. Masking the sample a second time removes what energy has reached materials B and C and causes a substantial reduction in the spectroscopic mixing of the samples. Masking the radiant energy at remote image planes is preferred to "near field" masking at the surface of the sample because near field masking may destroy the sample. Remote image plane masking is also physically more convenient and produces superior optical performance for viewing inside an optically thick sample.

The spatial definition of a microscope using multiple real image plane masks is not determined in the same way as is resolution in a conventional microscope. The improvement in spatial definition as a percentage of illuminated target area is substantially independent of the wavelength of the radiant energy formed by the remote image plane mask so long as: i) the masks define the same geometric target area at the sample image plane, and ii) the smallest dimension of the target area is greater than the wavelength of the radiant energy. If these conditions are met, the geometric shape of the target region may be established using radiation having a short wavelength and then observed with radiant energy having a longer wavelength without significantly enlarging the target area. Spatial definition may be limited by the contrast of the sample in the target area. A high contrast target sample diffracts more energy into adjacent regions than does a low contrast target since the amount of diffraction is proportional to the difference in the refractive indices between the adjoining materials. Masking more than two remote image planes does not appear to increase spatial definition although experimental evidence is not conclusive.

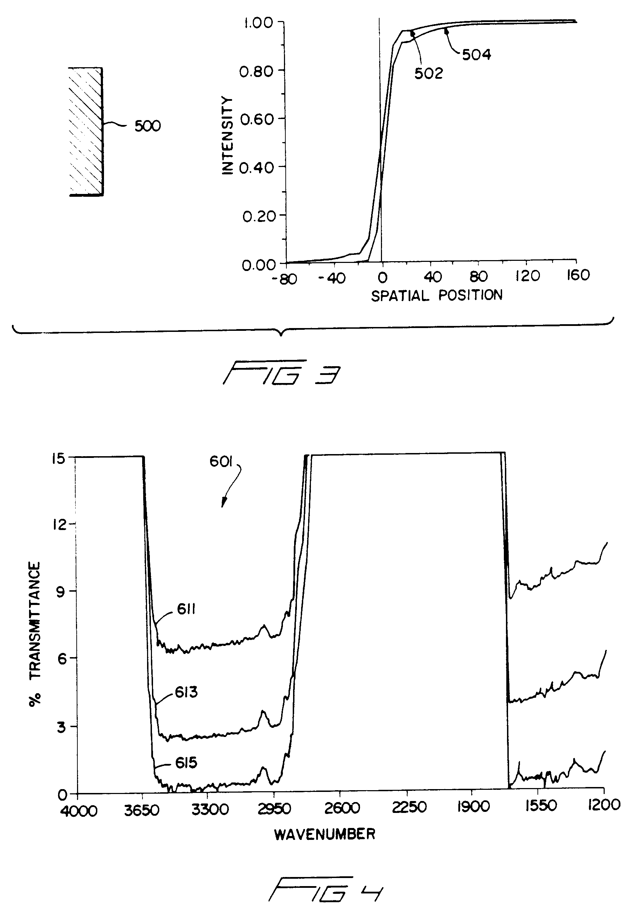

Figure 3 illustrates the principles of diffraction that govern the present invention. Figure 3a shows a diffraction edge 500. Profile 502 of Figure 3b represents the distribution of diffracted energy in a microscope objective after it is masked once by edge 500 at a remote image plane using radiant energy from a perfectly incoherent point source. Profile 504 represents a corresponding profile for radiant energy from the first remote image plane that is masked at a second remote image plane. The energy in the main diffraction lobe is pulled closer to the edge of the mask so that twice masking the radiant energy from a remote image plane effectively reduces the relative amount of energy present in the diffraction fringes. If mask edge 500 is treated as a circular aperture, ninety five percent of the power contained in the radiant energy is typically included within the fourth or fifth diffraction minimum. For a microscope objective that is twice masked, however, the ninety five percent power threshold is within the first diffraction minimum.

It is known in the art that the location of the first diffraction minimum is nearer a diffraction edge for coherent radiant than for incoherent radiant. Therefore, coherent radiation is preferred. Nevertheless, spatial definition at remote image planes also improves the resolution of a microscope objective using incoherent radiation. The resolution obtained using partially coherent radiation also increases.

Another method for decreasing the spread of the main diffraction lobe is to apodize the microscope objective, especially the condenser. Apodization, however, transfers power into the diffraction fringes and greatly reduces throughput efficiency by blocking most of the aperture. The preferred embodiment of the present invention uses apodized objectives in the form of Cassegrainian mirror lenses that block only a small percentage of the incident radiation. Resolution might be improved by apodizing the objective to an even greater extent at the expense of a decrease in signal to noise. However, the signal to noise ratio produced by the present invention already requires using more sensitive infrared detectors than presently found on some commercial FT-IR spectrophotometers. Any increase in the resolution of the microscope that might be gained by apodizing the aperture is not considered to be worth the loss in throughput efficiency.

EXAMPLE

Figure 4 shows an infrared transmission spectrum of a human hair obtained by twice masking the radiant energy at remote image planes, once for the incident radiant energy and once for transmitted radiant energy. The hair was placed at an image sample plane and the infrared radiant energy transmitted through the hair was directed to a detector connected to the computer of an FT-IR spectrophotometer. The hair represents a high contrast sample that produces significant diffraction at the sample image plane. An absorption band 601 corresponds to a region in which human hair is known to exhibit total absorption of infrared radiant energy. Profile 611 corresponds to the spectrum obtained after adjusting, under visible light, a four-shutter, variable aperture diaphragm at a remote image plane positioned between the sample and the detector to define a rectangular cross section area on the sample image plane corresponding to the shape of the hair. The radiant energy between approximately 2950 and 3500 wave numbers corresponds to stray diffracted radiant energy from regions surrounding the hair. Next, profile 613 was obtained by masking, in the same manner, a remote image plane between the source and the [detector] sample. The amount of stray radiant energy in the absorption band reaching the detector was reduced. Nevertheless, approximately 3% of the radiant energy in this band reaching the detector was from areas located outside the sample area on the sample image plane. Finally, profile 615 corresponds to the spectrum obtained by masking the transmitted infrared radiant energy at both remote image planes so that both masks define substantially the same area on the sample image plane. Profile 615 exhibits the total absorption anticipated in the absorption band.

The principles, preferred embodiments and modes of operation of the present invention have been described in the foregoing specification. The invention, which is intended to be protected herein should not, however, be construed as limited to the particular forms described herein as these are to be regarded as illustrative rather than restrictive.

## Claims

1. A microscope comprising:
   a source for a beam (1) of radiant energy;
   a sample plane (200) whereat a sample is positionable;
   radiant energy detector means; and
   an optics system (211, 213, 215, 217, 233, 231) defining a beam path for radiant energy from said source to said sample plane and from said sample plane to said detector means,
   said optics system comprising
   a first mask (202) disposed in said path and adjustable to define a shape for said path, and
   a first lens means (217) disposed in said path between said sample plane and said first mask and having conjugate points at said first mask and said sample plane;
   characterized in that said optics system further comprises
   a second adjustable mask (204) disposed in said path, and
   a second lens means (233) disposed in said path between said sample plane and said second mask and having conjugate points at said second mask and said sample plane.

2. A microscope as claimed in claim 1 wherein said optics means is operable to define a beam path section selected from the following:
   (i) from said second mask (204) to said second lens means (233), through said sample plane (200), to said first lens means (217), and to said first mask (202);
   (ii) from said first mask (204) via said first lens means (217) to said sample plane (200) and from said sample plane (200) back via said first lens means (217) to said first mask (202);
   (iii) from said second mask (204) via said second lens means (233) to said sample plane (200) and in part back via said second lens means (233) to said second mask (204) and in part through said sample plane (200) to said first lens means (217) and thence to said first mask (202);
   (iv) from said first mask (202) to said first lens means (217), through said sample plane (200), to said second lens means (233), and to said second mask (204);
   (v) from said second mask (204) via said second lens means (233) to said sample plane (200) and from said sample plane (200) back via said second lens means (233) to said second mask (204); and
   (vi) from said first mask (202) via said first lens means (217) to said sample plane (200) and in part back via said first lens means (217) to said first mask (202) and in part through said sample plane (200) to said second lens means (233) and thence to said second mask (204).

3. A microscope as claimed in claim 2 further comprising first beam path selection means operable to select between two or more of said path sections.

4. A microscope as claimed in claim 3 wherein said first selection means is operable to select between path sections (i) and (ii).

5. A microscope as claimed in any one of claims 1 to 4 further comprising a first light source (224, 225) for a visible light beam and viewing means (219) for observing visible light from said sample plane (200) and wherein said optics system further defines a light path for visible light from said light source to said sample plane and from said sample plane to said viewing means.

6. A microscope as claimed in claim 5 further comprising second beam path selection means operable to permit either radiant energy from said source for a radiant energy beam or visible light from a said light source to pass to said sample plane along a path section common to said beam path and said light path.

7. A microscope as claimed in either of claims 5 and 6 wherein said optics system is operable to define a said light path having a path section common with said beam path and comprising at least one of sections (i), (ii), (iv) and (v) as defined in claim 2.

8. A microscope as claimed in claim 7 further comprising a second visible light beam source (234, 235), wherein said optics system is operable to define a light path for visible light from said second source to said sample plane and from said sample plane to said viewing means at least in part along said common path section and wherein the light paths for light from said first and second light sources travel to said sample plane from said first mask and from said second mask respectively.

9. A microscope as claimed in either one of claims 7 and 8 further comprising light path selection means operable to select the path(s) along which visible light travels from said light source(s) to said viewing means.

10. A microscope as claimed in any one of the preceding claims wherein said first lens means comprises a Cassegrainian mirror lens having primary and secondary mirror elements and means for adjusting the separation thereof.

11. A microscope as claimed in any one of the preceding claims wherein said second lens means comprises a Cassegrainian mirror lens having primary and secondary mirror elements and means for adjusting the separation thereof.

12. A microscope as claimed in any one of the preceding claims wherein said first lens means has no further conjugate point on said beam path between said first mask and said sample plane.

13. A microscope as claimed in claim 1 wherein said first lens means has a further conjugate point on said path between said first mask and said sample plane and wherein an adjustable mask is disposed in said path at said further conjugate point.

14. A microscope as claimed in claim 1 wherein said source is a source for a beam (1) of invisible radiant energy, wherein said microscope further comprises a first visible light beam source (224, 225) and viewing means (219) for observing visible light from said first visible light beam source, wherein said optics system defines as a first beam path a beam path from said source for a beam of invisible radiant energy to said sample plane and from said sample plane to said detector means and defines as a second beam path a beam path from said first visible light beam source to said sample plane and from said sample plane to said viewing means, said first beam path having a path section in common with said second beam path, said first mask (202) being disposed in said common path section upstream of said sample plane in said first and second beam paths and being provided with means for the adjustment thereof to vary the shape of the beam aperture thereof, said first leans means (217) being disposed in said common path section between said first mask and said sample plane and having conjugate points in said first beam path at said first mask and said sample plane, said second mask (204) being disposed in said first beam path downstream of said sample plane in the transmittance mode of said first beam path and being provided with means for the adjustment thereof to vary the shape of the beam aperture thereof, and said second lens means (233) being disposed in said first beam path between said second mask and said sample plane and having conjugate points in said first beam path at said second mask and said sample plane, and wherein said microscope further comprises first selection means (221, 227) operable to direct either a radiant energy beam (1) or a visible light beam to said sample plane and thence to said detector means or to said viewing means respectively.

15. A microscope as claimed in claim 1 wherein said source is a source for a beam (1) of invisible radiant energy, wherein said microscope further comprises first and second visible light beam sources (224, 225, 234, 235) and viewing means (219) for observing visible light from said first and/or second visible light beam sources, wherein said optics system defines as a first beam path a beam path from said source for a beam of invisible radiant energy to said sample plane and from said sample plane to said detector means and defines as a second and a third beam path beam paths respectively from said first and second visible light beam sources to said sample plane and from said sample plane to said viewing means, said first beam path having a path section in common with said second and/or third beam paths, said first mask (202) being disposed in said common path section upstream of said sample plane in said first and second beam paths and being provided with means for the adjustment thereof to vary the shape of the beam aperture thereof, said first leans means (217) being disposed in said common path section between said first mask and said sample plane and having conjugate points in said first beam path at said first mask and said sample plane, said second mask (204) being disposed in said common path section upstream of said sample plane in said third beam path and downstream of said sample plane in the transmittance mode of said first beam path and being provided with means for the adjustment thereof to vary the shape of the beam aperture thereof,

and said second lens means (233) being disposed in said common path section between said second mask and said sample plane and having conjugate points in said first beam path at said second mask and said sample plane,

and wherein said microscope further comprises first selection means (221, 227) operable to direct either a radiant energy beam (1) or a visible light beam to said sample plane and thence to said detector means or to said viewing means respectively.

16. A microscope as claimed in either of claims 14 and 15 further comprising second selection means operable to direct to said detector means either radiant energy passing through said sample plane or radiant energy reflected at said sample plane.


**Patentansprüche**

1. Ein Mikroskop, welches folgendes aufweist:
   eine Quelle für einen Strahl (1) von Strahlungsenergie;
   eine probenebene (200), auf der eine Probe positionierbar ist;
   Strahlungsenergiedetektormittel; und
   ein Optiksystem (211, 213, 215, 217, 233, 231), welches einen Strahlenpfad für Strahlungsenergie definiert, und zwar von der erwähnten Quelle zu der erwähnten Probenebene und von der Probenebene zu den Detektormitteln, wobei das Optiksystem folgendes aufweist:
   eine erste Maske (202), die in dem Pfad angeordnet ist und zur Definition einer Form für den Pfad einstellbar ist, und
   erste Linsenmittel (217) angeordnet in dem Pfad zwischen der Probenebene und der ersten Maske und mit konjugierten Punkten an der ersten Maske und der Probenebene;
   dadurch gekennzeichnet, daß das Optiksystem weiterhin folgendes aufweist:
   eine zweite in dem Pfad angeordnete einstellbare Maske (204) und
   zweite Linsenmittel (233) angeordnet in dem Pfad zwischen der Probenebene und der zweiten Maske und mit konjugierten Punkten an der zweiten Maske und der Probenebene.

2. Mikroskop nach Anspruch 1, wobei die Optikmittel betätigbar sind, um einen aus folgendem ausgewählten Strahlenpfadabschnitt zu definieren:
   (i) von der zweiten Maske (204) zu den zweiten Linsenmitteln (233) durch die Probenebene (200) zu den ersten Linsenmitteln (217) und zu der ersten Maske (202);
   (ii) von der ersten Maske (204) über die ersten Linsenmittel (217) zu der Probenebene (200) und von der Probenebene (200) zurück über die ersten Linsenmittel (217) zu der ersten Maske (202);
   (iii) von der zweiten Maske (204) über die zweiten Linsenmittel (233) zu der Probenebene (200) und teilweise zurück über die zweiten Linsenmittel (233) zu der zweiten Maske (204) und zum Teil durch die Probenebene (200) zu den ersten Linsenmittel (217) und sodann zu der ersten Maske (202);
   (iv) von der ersten Maske (202) zu den ersten Linsenmitteln (217) durch die Probenebene (200) zu den zweiten Linsennitteln (233) und zu der zweiten Maske (204);
   (v) von der zweiten Maske (204) über die zweiten Linsenmittel (233) zu der Probenebene (200) und von der Probenebene (200) zurück über die zweiten Linsenmittel (233) zu der zweiten Maske (204); und
   (vi) von der ersten Maske (202) über die ersten Linsenmittel (217) zu der Probenebene (200) und teilweise zurück über die ersten Linsenmittel (217) zu der ersten Maske (202) und teilweise durch die Probenebene (200) zu den zweiten Linsenmitteln (233) und sodann zu der zweiten Maske (204).

3. Mikroskop nach Anspruch 2, wobei ferner erste Strahlenpfadauswahlmittel betätigbar sind, um zwischen zwei oder mehr der Pfadabschnitte auszuwählen.

4. Mikroskop nach Anspruch 3, wobei die ersten Auswahlmittel zur Auswahl zwischen den Pfadabschnitten (i) und (ii) betätigbar sind.

5. Mikroskop nach einem der Ansprüche 1 bis 4, wobei ferner eine erste Lichtquelle (224, 225) vorgesehen ist, für einen sichtbaren Lichtstrahl und Beobachtungsmittel (219) zur Beobachtung des sichtbaren Lichtes von der Probenebene (200) und wobei das Optiksystem ferner einen Lichtpfad für sichtbares Licht definiert, und zwar von der Lichtquelle zu der Probenebene und von der Probenebene zu den Beobachtungsmitteln.

6. Mikroskop nach Anspruch 5, wobei ferner zweite Strahlenpfadauswahlmittel betätigbar sind, um zu gestatten, daß entweder Strahlungsenergie von der Quelle für einen Strahlungsenergiestrahl oder sichtbares Licht von einer erwähnten Lichtquelle zu der Probenebene gelangt, und zwar entlang eines Pfadabschnittes, der dem erwähnten Strahlpfad und dem erwähnten Lichtpfad gemeinsam ist.

7. Mikroskop nach Anspruch 5 oder 6, wobei das Optiksystem betätigbar ist, um einen erwähnten Lichtpfad zu definieren, mit einem Pfadabschnitt, der mit dem erwähnten Strahlenpfad gemeinsam ist und mindestens einen der in Anspruch 2 definierten Abschnitte (i), (ii), (iv) und (v) aufweist.

8. Mikroskop nach Anspruch 7, wobei ferner eine zweite Strahlenquelle (234, 235) für sichtbares Licht vorgesehen ist, und wobei das optiksystem betätigbar ist, um einen Lichtpfad für sichtbares Licht zu definieren, und zwar von der zweiten Quelle zu der Probenebene und von der Probenebene zu den Beobachtungsmitteln zumindest teilweise entlang des erwähnten gemeinsamen Pfadabschnittes, und wobei die Lichtpfade für Licht von den ersten und zweiten Lichtquellen zu der Probenebene laufen, und zwar von der ersten Maske bzw. von der zweiten Maske.

9. Mikroskop nach einem der Ansprüche 7 und 8, wobei ferner Lichtpfadauswahlmittel betätigbar sind, um den Lichtpfad oder die Lichtpfade auszuwählen, entlang dem oder entlang denen sichtbares Licht läuft, und zwar von der oder den Lichtquellen zu den Beobachtungsmitteln.

10. Mikroskop nach einem der vorhergehenden Ansprüche, wobei die ersten Linsenmittel eine Cassegrain-Spiegellinse aufweisen mit primären und sekundären Spiegelementen und Mittel zum Einstellen der Trennung davon.

11. Mikroskop nach einem der vorhergehenden Ansprüche, wobei die zweiten Mittel eine Cassegrain-Spiegellinse aufweisen mit primären und sekundären Spiegelelementen und Mittel zur Einstellung der Trennung davon.

12. Mikroskop nach einem der vorhergehenden Ansprüche, wobei die ersten Linsenmittel keinen weiteren konjugierten Punkt auf dem erwähnten Strahlenpfad zwischen der ersten Maske und der Probenebene aufweisen.

13. Mikroskop nach Anspruch 1, wobei die ersten Linsenmittel einen weiteren konjugierten Punkt auf dem erwähnten Pfad zwischen der ersten Maske und der erwähnten Probenebene aufweisen, und wobei die einstellbare Maske in dem Pfad an dem erwähnten weiteren konjugierten Punkt angeordnet ist.

14. Mikroskop nach Anspruch 1, wobei die erwähnte Quelle eine Quelle für einen Strahl (1) aus nicht sichtbarer Strahlungsenergie ist, wobei das Mikroskop ferner eine erste Strahlenquelle (224, 225) für sichtbares Licht und Beobachtungsmittel (219) aufweist zur Beobachtung des sichtbaren Lichts von der ersten Strahlenquelle für sichtbares Licht, wobei das Optiksystem als einen ersten Strahlenpfad einen Strahlenpfad definiert von der Quelle für einen Strahl unsichtbarer Strahlungsenergie zu der Probenebene und von der Probenebene zu den Detektormitteln, und wobei das optische System ferner als einen zweiten Strahlenpfad einen Strahlenpfad definiert von der ersten Strahlenquelle für sichtbares Licht zu der Probenebene und von der Probenebene zu den Beobachtungsmitteln, wobei der erste Strahlenpfad einen Pfadabschnitt gemeinsam mit dem zweiten Strahlenpfad besitzt, wobei die erste Maske (202) in dem gemeinsam Pfadabschnitt angeordnet ist, und zwar stromaufwärts gegenüber der Probenebene in den ersten und zweiten Strahlenpfaden, und zwar versehen mit Mitteln zur Einstellung davon zum Zwecke der Veränderung der Form der Strahlenapertur davon, wobei die ersten Linsenmittel (217) in dem gemeinsamen Pfadabschnitt angeordnet sind, und zwar zwischen der ersten Maske und der Probenebene und ferner konjugierte Punkte im erwähnten ersten Strahlenpfad an der ersten Maske und der Probenebene aufweisen, wobei die zweite Maske (204) in dem ersten Strahlenpfad stromabwärts gegenüber der Probenebene in der Durchlässigkeitsbetriebsart (Transmittanz-Mode) des ersten Strahlenpfads angeordnet ist und mit Mitteln versehen ist zur Einstellung davon zur Veränderung der Form der Strahlenapertur davon, wobei die zweiten Linsenmittel (233) in dem ersten Strahlenpfad zwischen der zweiten Maske und der Probenebene angeordnet sind und konjugierte Punkte in dem ersten Strahlenpfad an der zweiten Maske und der Probonene aufweisen, und wobei das Mikroskop ferner erste Auswahlmittel (221, 227) aufweist, die betätigbar sind, um einen Strahlungsenergiestrahl (1) oder einen sichtbaren Lichtstrahl zu der Probenebene zu leiten und sodann zu den Detektormitteln bzw. zu den Beobachtungsmitteln.

15. Mikroskop nach Anspruch 1, wobei die erwähnte Quelle eine Quelle für einen Strahl (1) aus unsichtbarer Strahlungsenergie ist, wobei das Mikroskop ferner erste und zweite Strahlenquellen (224, 225, 234, 235) für sichtbares Licht und Beobachtungsmittel (219) aufweist zur Beobachtung des sichtbaren Lichtes von den ersten und/oder zweiten Strahlenquellen für sichtbares Licht, wobei das Optiksystem als einen ersten Strahlenpfad einen Strahlenpfad definiert, der von der Quelle für einen Strahl aus unsichtbarer Strahlungsenergie zu der Probenebene und von der Probenebene zu den Detektormitteln verläuft, und wobei das Optiksystem als einen zweiten und einen dritten Strahlenpfad jeweils Strahlenpfade definiert von den ersten und zweiten Strahlenquellen für sichtbares Licht zu der Probenebene und von der Probenebene zu den Beobachtungsmitteln, wobei der erste Strahlenpfad einen Pfadabschnitt gemeinsam mit den zweiten und-/oder dritten Strahlenpfaden aufweist,

wobei die erste Maske (202) in dem gemeinsamen Pfadabschnitt stromaufwärts gegenüber der Probenebene in den ersten und zweiten Strahlenpfaden angeordnet ist und mit Mitteln zur Einstellung davon versehen ist, und zwar zur Veränderung der Form der Strahlenapertur davon,

wobei die ersten Linsenmittel (217) in dem gemeinsamen Pfadabschnitt zwischen der ersten Maske und der Probenebene angeordnet sind und konjugierte Punkte in dem ersten Strahlenpfad an der ersten Maske und der Probenebene aufweisen,

wobei die zweite Maske (204) in dem gemeinsamen Pfadabschnitt stromaufwärts gegenüber der Probenebene in dem dritten Strahlenpfad und stromabwärts gegenüber der Probenebene in der Durchlässigkeitsbetriebsart des ersten Strahlenpfades angeordnet ist und mit Mitteln versehen ist zur Einstellung davon und zur Veränderung der Form der Strahlenapertur davon,

wobei die zweiten Linsenmittel (233) in dem gemeinsamen Pfadabschnitt angeordnet sind zwischen der zweiten Maske und der Probenebene und konjugierte Punkte aufweisen in dem ersten Strahlenpfad an der zweiten Maske und der Probenebene,

und wobei das Mikroskop ferner erste Auswahlmittel (221, 227) aufweist, die betätigbar sind, um entweder einen Strahlungsenergiestrahl (1) oder einen sichtbaren Lichtstrahl zu der Probenebene und von dort zu den Detektormitteln bzw. den Bechachtungsmitteln zu leiten.

16. Mikroskop nach Anspruch 14 oder 15, wobei ferner zweite Auswahlmittel vorgesehen sind, die betätigbar sind, um zu den Detektormitteln entweder durch die Probenebene hindurchgehende Strahlungsenergie oder an der Probenebene reflektierte Strahlungsenergie zu leiten.

**Revendications**

1. Microscope comprenant :
une source destinée à fournir un faisceau (1) d'énergie rayonnante ;
un plan d'échantillon (200), sur lequel un échantillon peut être placé ;
un moyen détecteur d'énergie rayonnante ; et
un système optique (211, 213, 215, 217, 233, 231) qui définit un trajet de faisceau pour l'énergie rayonnante, allant de ladite source audit plan d'échantillon et dudit plan d'échantillon audit moyen détecteur,
ledit système optique comprenant :
un premier masque (202) disposé dans ledit trajet et pouvant être ajusté de façon à définir une forme pour ledit trajet, et
un premier moyen formant lentille (217) disposé dans ledit trajet entre ledit plan d'échantillon et ledit premier masque et possédant des points conjugués au niveau dudit premier masque et dudit plan d'échantillon ;
caractérisé en ce que ledit système optique comprend en outre :
un deuxième masque ajustable (204) disposé dans ledit trajet, et
un deuxième moyen formant lentille (233) disposé dans ledit trajet entre ledit plan d'échantillon et ledit deuxième masque et ayant des points conjugués au niveau dudit deuxième masque et dudit plan d'échantillon.

2. Microscope selon la revendication 1, où ledit système optique peut être activé de façon à définir une section de trajet de faisceau choisie entre les suivantes :
(i) dudit deuxième masque (204) audit deuxième moyen lentille (233), à travers ledit plan d'échantillon (200), puis jusqu'audit premier moyen lentille (217), et audit premier masque (202) ;
(ii) dudit premier masque (202) audit plan d'échantillon (200) via ledit premier moyen lentille (217) et retour dudit plan d'échantillon (200) audit premier masque (202) via ledit premier moyen lentille (217) ;
(iii) dudit deuxième masque (204) audit plan d'échantillon (200) via ledit deuxième moyen lentille (233), puis retour, pour partie via ledit deuxième moyen lentille (233) audit deuxième masque (204) et, pour partie à travers ledit plan d'échantillon (200) audit premier moyen lentille (217) et, de là, audit premier masque (202) ;
(iv) dudit premier masque (202) audit premier moyen lentille (217), à travers ledit plan d'échantillon (200), puis jusqu'audit deuxième moyen lentille (233), et audit deuxième masque (204) ;
(v) dudit deuxième masque (204) audit plan d'échantillon (200) via ledit deuxième moyen lentille (233) et retour dudit plan d'échantillon (200) audit deuxième masque (204) via ledit deuxième moyen lentille (233) ; et

(vi) dudit premier masque (202) audit plan d'échantillon (200) via ledit premier moyen lentille (217), puis retour, pour partie via ledit premier moyen lentille (217) audit premier masque (202) et, pour partie à travers ledit plan d'échantillon (200) audit deuxième moyen lentille (233) et, de là, audit deuxième masque (204).

3. Microscope selon la revendication 2, comprenant en outre un premier moyen de sélection de trajet de faisceau pouvant être activé de façon à choisir entre deux ou plus de deux desdites sections de trajet.

4. Microscope selon la revendication 3, où ledit premier moyen de sélection peut être activé de façon à choisir entre les sections de trajet (i) et (ii).

5. Microscope selon l'une quelconque des revendications 1 à 4, comprenant en outre une première source lumineuse (224, 225) destinée à fournir un faisceau de lumière visible et un moyen de visualisation (219) servant à observer la lumière visible venant dudit plan d'échantillon (200), et où ledit système optique définit en outre un trajet lumineux pour la lumière visible, qui va de ladite source lumineuse audit plan d'échantillon et dudit plan d'échantillon audit moyen de visualisation.

6. Microscope selon la revendication 5, comprenant en outre un deuxième moyen de sélection de trajet de faisceau pouvant être activé de façon à permettre que l'énergie rayonnante de ladite source destinée à fournir un faisceau d'énergie rayonnante ou bien la lumière visible de ladite source lumineuse parvienne audit plan d'échantillon le long d'une section de trajet commune audit trajet de faisceau et audit trajet lumineux.

7. Microscope selon l'une quelconque des revendications 5 et 6, où ledit système optique peut être activé de façon à définir un dit trajet lumineux qui possède une section de trajet commune avec ledit trajet de faisceau et qui comprend au moins l'une des sections (i), (ii), (iv) et (v) telles que définies dans la revendication 2.

8. Microscope selon la revendication 7, comprenant en outre une deuxième source de faisceau lumineux visible (234, 235), où ledit système optique peut être activé de façon à définir un trajet lumineux pour la lumière visible, allant de ladite deuxième source audit plan d'échantillon et dudit plan d'échantillon audit moyen de visualisation, au moins en partie le long de ladite section de trajet commune, et où les trajets lumineux de lumière visible partant desdites première et deuxième sources lumineuses vont jusqu'audit plan d'échantillon respectivement depuis ledit premier masque et depuis ledit deuxième masque.

9. Microscope selon l'une quelconque des revendications 7 et 8, comprenant en outre un moyen de sélection de trajet lumineux pouvant être activé pour sélectionner le ou les trajet(s) le long desquels la lumière visible se déplace de ladite ou desdites source(s) lumineuse(s) jusqu'audit moyen de visualisation.

10. Microscope selon l'une quelconque des revendications précédentes, où ledit premier moyen lentille comprend une lentille pour miroir Cassegrain possédant des éléments de miroir primaire et secondaire et un moyen servant à ajuster leur séparation.

11. Microscope selon l'une quelconque des revendications précédentes, où ledit deuxième moyen de lentille comprend une lentille pour miroir Cassegrain possédant des éléments de miroir primaire et secondaire et un moyen servant à ajuster leur séparation.

12. Microscope selon l'une quelconque des revendications précédentes, où ledit premier moyen lentille ne possède pas d'autre point conjugué sur ledit trajet de faisceau entre ledit premier masque et ledit plan d'échantillon.

13. Microscope selon la revendication 1, où ledit premier moyen lentille possède un autre point conjugué sur ledit trajet de faisceau entre ledit premier masque et ledit plan d'échantillon, et où un masque ajustable est disposé dans ledit trajet au niveau dudit autre point conjugué.

14. Microscope selon la revendication 1, où ladite source est une source destinée à fournir un faisceau (1) d'énergie rayonnante invisible,

où ledit microscope comprend en outre une première source de faisceau de lumière visible (224, 225) et un moyen de visualisation (219) permettant d'observer la lumière visible venant de ladite première source de faisceau de lumière visible,

où ledit système optique définit, comme premier trajet de faisceau, un trajet de faisceau allant de ladite source destinée à fournir un faisceau d'énergie rayonnante invisible audit plan d'échantillon et dudit plan d'échantillon audit moyen détecteur et définit, comme deuxième trajet de faisceau, un trajet de faisceau allant de ladite première source de faisceau de lumière visible audit plan d'échantillon et dudit plan d'échantillon audit moyen de visualisation, ledit premier trajet de faisceau ayant une section de trajet en commun avec ledit deuxième trajet de faisceau,

ledit premier masque (202) étant disposé dans ladite section de trajet commune en amont dudit plan d'échantillon dans lesdits premier et deuxième trajets de faisceau et étant doté d'un moyen permettant son ajustement de façon à faire varier la forme de son ouverture de faisceau,

ledit premier moyen lentille (217) étant disposé dans ladite section de trajet commun entre ledit premier masque et ledit plan d'échantillon et ayant des points conjugués dans ledit premier trajet de faisceau au niveau dudit premier masque et dudit plan d'échantillon,

ledit deuxième masque (204) étant disposé dans ledit premier trajet de faisceau en aval dudit plan d'échantillon suivant le mode de transmission dudit premier trajet de faisceau et étant doté d'un moyen permettant son ajustement afin de faire varier la forme de son ouverture de faisceau, et

ledit deuxième moyen lentille (233) étant disposé dans ledit premier trajet de faisceau entre ledit deuxième masque et ledit plan d'échantillon et ayant des points conjugués dans ledit premier trajet de faisceau au niveau dudit deuxième masque et dudit plan d'échantillon, et

où ledit microscope comprend en outre un premier moyen de sélection (221, 227) pouvant être activé de façon à diriger un faisceau d'énergie rayonnante (1) ou un faisceau de lumière visible jusqu'audit plan d'échantillon et, de là, respectivement jusqu'audit moyen détecteur ou audit moyen de visualisation.

15. Microscope selon la revendication 1, où ladite source est une source destinée à fournir un faisceau (1) d'énergie rayonnante invisible,

où ledit microscope comprend en outre des première et deuxième sources de faisceau de lumière visible (224, 225, 234, 235) et un moyen de visualisation (219) permettant d'observer la lumière visible venant desdites première et, ou bien, deuxième sources de faisceau de lumière visible,

où ledit système optique définit, comme premier trajet de faisceau, un trajet de faisceau allant de ladite source destinée à fournir un faisceau d'énergie rayonnante invisible jusqu'audit plan d'échantillon et dudit plan d'échantillon jusqu'audit moyen détecteur et définit, comme deuxième et troisième trajets de faisceau, des trajets de faisceau allant respectivement desdites première et deuxième sources de faisceau de lumière visible jusqu'audit plan d'échantillon et dudit plan d'échantillon jusqu'audit moyen de visualisation, ledit premier trajet de faisceau ayant une section de trajet en commun avec lesdits deuxième et, ou bien, troisième trajets de faisceau,

ledit premier masque (202) étant disposé dans ladite section de trajet commune en amont dudit plan d'échantillon dans lesdits premier et deuxième trajets de faisceau et étant doté d'un moyen permettant son ajustement de façon à faire varier la forme de son ouverture de faisceau,

ledit premier moyen lentille (217) étant disposé dans ladite section de trajet commune entre ledit premier masque et ledit plan d'échantillon et ayant des points conjugués dans ledit premier trajet de faisceau au niveau dudit premier masque et dudit plan d'échantillon,

ledit deuxième masque (204) étant disposé dans ladite section de trajet commune en amont dudit plan d'échantillon dans ledit troisième trajet de faisceau et en aval dudit plan d'échantillon dans le mode de transmission dudit premier trajet de faisceau et étant doté d'un moyen permettant son ajustement de façon à faire varier la forme de son ouverture de faisceau, et

ledit deuxième moyen lentille (233) étant disposé dans ladite section de trajet commune entre ledit deuxième masque et ledit plan d'échantillon et ayant des points conjugués dans ledit premier trajet de faisceau au niveau dudit deuxième masque et dudit plan d'échantillon, et

où ledit microscope comprend en outre un premier moyen de sélection (221, 227) pouvant être activé de façon à diriger un faisceau d'énergie rayonnante (1) ou un faisceau de lumière visible jusqu'audit plan d'échantillon et, de là, respectivement jusqu'audit moyen détecteur ou audit moyen de visualisation.

16. Microscope selon l'une quelconque des revendications 14 et 15, comprenant en outre un deuxième moyen de sélection pouvant être activé pour diriger jusqu'audit moyen détecteur l'énergie rayonnante passant à travers ledit plan d'échantillon ou l'énergie rayonnante réfléchie sur ledit plan d'échantillon.

FIG 1

FIG 2a

FIG 2c

FIG 2b

FIG 2d

FIG 3

FIG 4